# EUROPÄISCHE PATENTSCHRIFT

(11) **EP 1 446 583 B1**
(45) Veröffentlichungstag und Bekanntmachung des Hinweises auf die Patenterteilung: **19.09.2007**
(21) Anmeldenummer: 02782729.4
(22) Anmeldetag: 19.10.2002
(51) Int. Cl.: F04D 29/30, F04D 29/28, H02K 9/06

(54) **LÜFTERRAD FÜR ELEKTRISCHE MASCHINEN**
FAN IMPELLER FOR ELECTRICAL MACHINES
ROUE DE VENTILATEUR DE MACHINES ELECTRIQUES

(30) Priorität: 09.11.2001 DE 10155224
(43) Veröffentlichungstag der Anmeldung: 18.08.2004
(73) Patentinhaber: ROBERT BOSCH GMBH, 70442 Stuttgart (DE)
(72) Erfinder: BRAUN, Horst, 70469 Stuttgart (DE); LUTZ, Hans-Joachim, 68623 Lampertheim (DE)
(86) Internationale Anmeldenummer: PCT/DE2002/003951
(87) Internationale Veröffentlichungsnummer: WO 2003/040571

(56) Entgegenhaltungen:
- DE-A- 4 434 598
- DE-A- 4 446 345
- DE-A- 19 909 748
- GB-A- 702 287
- US-A- 2 370 600
- US-A- 3 782 853
- US-A- 5 693 992

## Beschreibung

### Stand der Technik

Die Erfindung betrifft ein Lüfterrad für elektrische Maschinen, insbesondere für Drehstromgeneratoren von Kraftfahrzeugen, nach der Gattung des Anspruchs 1. Ein solches Lüfterrad ist bekannt z.B. aus der DE-A-44 34 598.

Zur Kühlung von elektrischen Maschinen, insbesondere von Drehstromgeneratoren in Kraftfahrzeugen werden üblicherweise Lüfterräder verwendet, die starre Lüfterschaufeln aufweisen und die so dimensioniert sind, dass sie bereits bei niedrigen Drehzahlen genügend Kühlluft für die Abfuhr der in der elektrischen Maschine auftretenden Verlustwärme liefern. Bei Lüfterrädern mit starren Schaufeln nimmt die geförderte Luftmenge mit steigender Drehzahl zu. Da jedoch die Verlustleistung von Generatoren in Kraftfahrzeugen ab einer gewissen Drehzahl nicht mehr so stark wie im unteren Drehzahlbereich ansteigt, wird folglich bei höheren Drehzahlen mehr Luft von dem Lüfterrad gefördert, als zum Abführen der Verlustwärme erforderlich wäre. Die geförderte Kühlluftmenge verursacht dabei insbesondere bei höheren Drehzahlen störende Geräusche. Außerdem wird für die unnötig starke Förderung der Kühlluft im oberen Drehzahlbereich zusätzliche Antriebsleistung von der Brennkraftmaschine des Kraftfahrzeugs für das Lüfterrad benötigt.

Aus der DE-OS 20 49 679 ist es bekannt, zur Drosselung der Kühlluft-Fördermenge bei höheren Drehzahlen sämtliche Lüfterschaufeln eines Lüfterrades so auszubilden, dass sie jeweils nur mit ihrem radial äußeren Endabschnitten mit einer Lüfterscheibe fest verbunden sind. Ihr jeweils innerer Endabschnitt bildet dabei eine biegsame Zunge, die bei steigenden Drehzahlen durch eine dort auftretende Fliehkraft zunehmend radial nach außen verschwenkt wird. Dadurch wird der Querschnitt der Lüfterkanäle verringert, die durch die benachbarten Lüfterschaufeln gebildet werden, durch die die unterhalb der Lüfterschaufeln axial angesaugte Kühlluft radial nach außen geblasen wird. Durch diese Lösung wird zwar die Antriebsleistung für das Lüfterrad mit zunehmender Drehzahl verringert und so der Gesamtwirkungsgrad der Maschine verbessert. Die Lüfterschaufeln sind jedoch in Drehrichtung von innen nach außen derart vorwärts geneigt, dass sich auch an den biegsamen, nach außen schwenkbaren Zungen mit zunehmender Drehzahl ein höherer Druck aufbaut. Da die nach innen gerichteten, verschwenkbaren Enden der Lüfterschaufeln auch bei hohen Drehzahlen frei in die Lüfterkanäle ragen, wird damit das störende Lüftergeräusch noch verstärkt. Außerdem treten dort bei Schwingungen der Antriebsdrehzahl des Lüfterrades Schaufelschwingungen auf, die zusätzliche Geräusche verursachen können und die insbesondere zu einer Materialermüdung und damit zum Abbrechen der Lüfterschaufeln führen können.

Mit der vorliegenden Lösung wird angestrebt, neben einer Verringerung der Antriebsleistung am Lüfterrad bei hohen Drehzahlen auch die dort auftretenden Störgeräusche deutlich zu verringern und dabei gleichzeitig das Schwingungsverhalten der Lüfterschaufeln zu verbessern.

### Vorteile der Erfindung

Das erfindungsgemäße Lüfterrad mit den kennzeichnenden Merkmalen des Anspruchs 1 hat den Vorteil, dass durch die Kombination von starren Lüfterschaufeln und Lüfterschaufeln mit verschwenkbaren, inneren Endabschnitten nur ein Teil der Luftkanäle, vorzugsweise nur jeder zweite Luftkanal mit zunehmender Drehzahl durch einen verschwenkbaren inneren Endabschnitt einer Lüfterschaufel in seinem Querschnitt stark verringert oder sogar vollständig geschlossen werden kann, so dass die Antriebsleistung für das Lüfterrad mit zunehmender Drehzahl abnimmt. Da auf diese Weise vorzugsweise nur jeder zweite Luftkanal zwischen den Lüfterschaufeln im Querschnitt verringert wird, lassen sich auch die Strömungsgeräusche herabsetzen. Durch die reduzierte Luftförderung nimmt die Antriebsleistung für den Lüfter mit zunehmenden Drehzahlen ab, so dass sich der Gesamtwirkungsgrad der elektrischen Maschine dadurch verbessert. Bei Drehstromgeneratoren in Kraftfahrzeugen, deren Leistung ab einer gewissen Drehzahl nahezu konstant bleibt, kommt diesem Effekt hier eine besondere Bedeutung zu. Eine einfache und robuste Ausführung des Lüfterrades ergibt sich dadurch, dass die Lüfterscheibe aus einer Blechplatine gestanzt und geprägt ist, wobei die auf ihrer ganzen Länge mit den Lüfterscheiben fest verbundenen Schaufeln aus dem Blech der Lüfterscheibe freigestanzt und axial herausgebogen sind. Die übrigen Lüfterschaufeln mit dem jeweils verschwenkbaren inneren Endabschnitt sind in vorteilhafter Weise aus Kunststoff hergestellt. Zur Erzielung einer hohen Formsteifigkeit dieser Lüfterschaufeln wird in zweckmäßiger Weise der Kunststoff des äußeren Endabschnittes jeweils um eine aus der Blechplatine der Lüfterscheibe freigestanzte und axial herausgebogene Haltelasche herumgespritzt.

Vorteilhafte Weiterbildungen und Ausgestaltungen ergeben sich aus den übrigen, in den Unteransprüchen genannten Merkmalen. So ergibt sich eine konstruktiv und herstellungstechnisch besonders einfache Lösung, wenn der verschwenkbare innere Endabschnitt der jeweiligen Lüfterschaufel über ein Gelenk mit dem äußeren Endabschnitt verbunden ist. Das Gelenk ist besonders zuverlässig ausgebildet, indem es als ein über die ganze axiale Breite der Lüfterschaufel reichendes, insbesondere aus Kunststoff hergestelltes Filmscharnier ausgebildet ist. Zur Vermeidung von Schwingungen und Schwingungsgeräuschen an den verschwenkbaren inneren Endabschnitten der Lüfterschaufeln bilden die auf der ganzen Länge mit der Lüfterscheibe fest verbundenen Lüfterschaufeln jeweils einen Anschlag, gegen den sich jeweils das Ende des verschwenkbaren inneren Endabschnittes einer benachbarten Lüfterschaufel bei maximaler Verschwenkung anlegt, so dass der zwischen beiden Lüfterschaufeln gebildete Luftkanal mit dem Erreichen einer bestimmten Drehzahl des Lüfterrades dadurch geschlossen wird.

Eine besonders strömungsgünstige Ausführungsform des Lüfterrades ergibt sich dadurch, dass alle äußeren Endabschnitte der Lüfterschaufeln mit verschwenkbaren inneren Endabschnitten über eine Deckscheibe miteinander verbunden sind, welche der Lüfterscheibe gegenüberliegend an der axial äußeren Stirnseite der Lüfterschaufeln angeordnet ist. Für einen möglichst geräuscharmen Eintritt der Kühlluft in das Lüfterrad ist zweckmäßiger Weise die Deckscheibe mit einer zentrischen Öffnung und mit einem dort angeformten axial nach außen gerichteten Einströmtrichter versehen. Dadurch ergibt sich ferner die Möglichkeit, das Zurückströmen eines Teiles der vom Lüfterrad abströmenden Kühlluft zum Einströmtrichter dadurch zu verhindern, dass der Einströmtrichter der Deckscheibe mit engem Luftspalt in eine zentrische Öffnung eines Lagerschildes der elektrischen Maschine einsetzbar ist. Durch diesen engen Luftspalt wird ein Beipass für die Kühlluft am Lüfterrad unterbunden. Eine besonders einfache Ausführungsform des Lüfterrades ergibt sich dadurch, dass die Deckscheibe und die Lüfterschaufeln mit verschwenkbarem inneren Endabschnitt einteilig aus einem Kunststoff hergestellt sind.

Um bei einem Drehstromgenerator mit Klauenpolläufer die dort entstehende Verlustwärme über das Polrad mitabführen zu können, wird in vorteilhafter Ausgestaltung der Erfindung die Lüfterscheibe auf der Stirnseite einer Polscheibe des Klauenpolläufers thermisch leitend befestigt, vorzugsweise angeschweißt.

Durch die abwechselnde Anordnung der Lüfterschaufeln mit und ohne schwenkbarem inneren Endabschnitt wird auch nur jeder zweite Luftkanal zwischen den Lüfterschaufeln durch einen verschwenkbaren inneren Endabschnitt einer Lüfterschaufel mit zunehmender Drehzahl verringert und ab einer bestimmten Drehzahl vollständig geschlossen, wogegen der jeweils benachbarte Luftkanal im äußeren Bereich des Lüfterrades im Querschnitt unverändert bleibt. Durch die Wahl des Abstandes einer jeden Lüfterschaufel mit verschwenkbarem Innenabschnitt zu der jeweils in Drehrichtung davor- und dahinterliegenden starren Lüfterschaufel läßt sich das Verhältnis der Querschnitte eines verschließbaren Luftkanales und des daneben liegenden nicht verschließbaren Luftkanales zwischen den Lüfterschaufeln den jeweiligen Bedürfnissen für den Einsatz des Lüfterrades anpassen. Bei einer Verwendung des Lüfterrades in Drehstromgeneratoren für Kraftfahrzeuge werden zweckmäßiger Weise die Abstände der Lüfterschaufeln voneinander etwa gleich groß gewählt, so dass bei maximaler Verschwenkung der verschwenkbaren inneren Endabschnitte der Strömungsquerschnitt zwischen jeweils drei benachbarten Lüfterschaufeln um etwa 50 % verringert wird. Eine strömungsgünstige und damit geräuscharme Anordnung der Lüfterschaufeln ergibt sich ferner dadurch, dass sie entgegen der Drehrichtung aus der Radialrichtung heraus geneigt und nach rückwärts gekrümmt sind. Da die Lüfterschaufeln mit verschwenkbarem inneren Endabschnitt vorzugsweise in einer Spritzform aus Kunststoff hergestellt werden, kann in vorteilhafter Weise die vom Lüfter radial nach außen beförderte Kühlluftmenge dadurch vergrößert werden, dass die axiale Erstreckung der Lüfterschaufel mit verschwenkbarem inneren Endabschnitt größer ist als die axiale Erstreckung der auf ganzer Länge mit der Lüfterscheibe fest verbundenen, vorzugsweise aus dem Blech der Lüfterscheibe herausgebogenen Lüfterschaufeln.

### Zeichnung

Weitere Einzelheiten der Erfindung sind in den nachfolgend beschriebenen Ausführungsbeispielen an Hand der dazugehörigen Zeichnung näher erläutert. Es zeigen:
Fig. 1 eine Lüfterscheibe zur Herstellung eines erfindungsgemäßen Lüfterrades in der Draufsicht,
Fig. 2 ein fertiggestelltes Lüfterrad ohne Deckscheibe und
Fig. 3 einen Längsschnitt durch die obere hintere Hälfte eines Drehstromgenerators für Kraftfahrzeuge mit einem erfindungsgemäßen Lüfterrad mit Deckscheibe.

### Beschreibung der Ausführungsbeispiele

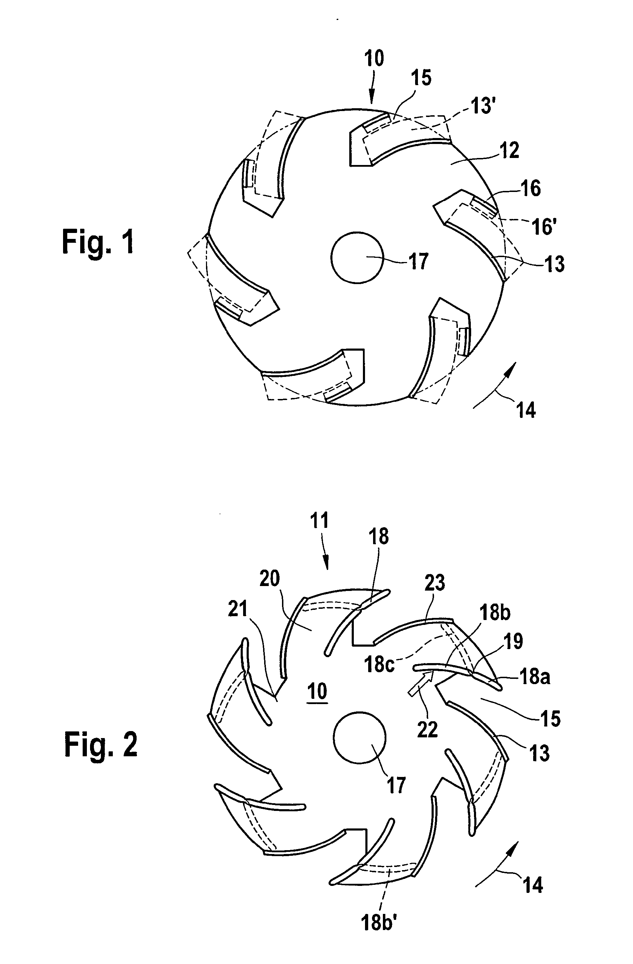

Fig. 1 zeigt die Draufsicht auf eine Lüfterscheibe 10 zur Herstellung eines Lüfterrades 11 nach Fig. 2. Die kreisförmige Lüfterscheibe 10 ist aus einer Blechplatine 12 aus Stahlblech gestanzt, wobei sie an ihrer vorderen, axial nach außen gerichteten Stirnseite eine bestimmte Anzahl über den Umfang verteilt angeordnete erste Lüfterschaufel 13 aufweist. Die Lüfterschaufeln 13 sind dabei aus dem Stahlblech der Lüfterscheibe 10 freigestanzt und axial nach vorn herausgebogen. Die Lüfterschaufeln 13 sind außerdem aus der Radialrichtung heraus von innen nach außen entgegen der durch einen Pfeil 14 gekennzeichneten Drehrichtung des Lüfterrades 10 geneigt und zusätzlich rückwärts gekrümmt. Vor dem Herausbiegen der Lüfterschaufeln 13 liegen diese in der Ebene der Lüfterscheibe 10, wie dies in Fig. 1 gestrichelt dargestellt und mit 13' bezeichnet ist. Für jede dieser Lüfterschaufeln 13 befindet sich am Umfang der Lüfterscheibe 10 eine Ausstanzung 15. Jede dieser Ausstanzungen 15 umfaßt ferner eine dort ebenfalls aus der Blechplatine 12 der Lüfterscheibe 10 freigestanzte und axial nach vorn herausgebogene Haltelasche 16, die vor dem Hochbiegen in die Ausstanzung 15 hineinragt und gestrichelt dargestellt mit 16' bezeichnet ist. Eine zentrische Öffnung 17 der Lüfterscheibe 10 dient zur Aufnahme einer Antriebswelle.

Fig. 2 zeigt das fertige Lüfterrad 11 in der Vorderansicht, wobei zwischen den in Fig. 1 beschriebenen ersten Lüfterschaufeln 13 jeweils weitere bzw. zweite Lüfterschaufeln 18 angeordnet sind. Diese zweiten Lüfterschaufeln 18 haben jeweils einen äußeren Endabschnitt 18a und einen inneren Endabschnitt 18b, die jeweils über ein Gelenk 19 miteinander verbunden sind. Auch diese zweiten Lüfterschaufeln 18 sind von der Lüfterscheibe 10 aus in Achsrichtung nach vorn vorstehend und aus der Radialrichtung heraus von innen nach außen gegenüber der Drehrichtung 14 geneigt und rückwärts gekrümmt. Dadurch wird bei rotierendem Lüfterrad 11 die Kühlluft unterhalb der Lüfterschaufeln 13 und 18 axial angesaugt und durch zwischen ihnen sich ausbildenden Luftkanälen 20 und 21 radial nach außen geblasen.

Die zweiten Lüfterschaufeln 18 bestehen aus Kunststoff, wobei der Kunststoff des äußeren Endabschnittes 18a jeweils um die aus der Blechplatine 12 der Lüfterscheibe 10 freigestanzte und axial herausgebogene Haltelasche 16 herumgespritzt ist. Dadurch sind die zweiten Lüfterschaufeln 18 jeweils nur mit ihrem radial äußeren Endabschnitt 18a mit der Lüfterscheibe 10 fest verbunden. Ihr innerer Endabschnitt 18b ist über das Gelenk 19 verschwenkbar ausgebildet, so dass der innere Endabschnitt 18b der zweiten Lüfterschaufeln 18 jeweils bei steigenden Drehzahlen des Lüfterrades 11 durch eine dort auftretende Fliehkraft 22 zunehmend nach radial außen verschwenkt wird. Dadurch wird der Querschnitt des mit der benachbarten feststehenden ersten Lüfterschaufel 13 gebildete erste Luftkanal 20 verringert. Die Gelenke 19 sind dabei jeweils als ein über die ganze axiale Breite der zweiten Lüfterschaufeln 18 reichendes, aus Kunststoff bestehendes Filmscharnier ausgebildet. Durch die Dicke und Zähigkeit des Kunststoffmaterials an den Gelenken 19 läßt sich die Rückstellkraft für den verschwenkbaren inneren Endabschnitt 18a der zweiten Lüfterschaufeln 18 so einstellen, dass die gewünschte drehzahlabhängige Querschnittsverringerung der ersten Luftkanäle 20 in Abstimmung auf die dann an den inneren Endabschnitten 18b wirksamen Fliehkräfte erzielt wird. Da die ersten Lüfterschaufeln 13 auf ihrer ganzen Länge mit der Lüfterscheibe 10 fest verbunden sind, und somit nur jede zweite Lüfterschaufel 18 einen durch Fliehkraft nach außen verschwenkbaren inneren Endabschnitt 18b aufweist, bilden die ersten Lüfterschaufeln 13 durch entsprechende Anordnung jeweils einen Anschlag 23, gegen den sich jeweils das Ende 18c des verschwenkbaren inneren Endabschnittes 18b der benachbarten zweiten Lüfterschaufel 18 bei maximaler Verschwenkung anlegt, was in Figur 2 gestrichelt mit 18b' dargestellt ist. Die dazu erforderliche Drehzahl des Lüfterrades 11 läßt sich ebenfalls durch die Biegesteifigkeit des Gelenks 19 einstellen, so dass beim Erreichen dieser vorgegebenen Drehzahl der zwischen den beiden Lüfterschaufeln 13 und 18 gebildete Luftkanal 20 dadurch geschlossen wird. Im Ausführungsbeispiel nach Fig. 2 sind die Abstände der Lüfterschaufeln 13 und 18 voneinander etwa gleich groß, so dass bei maximaler Verschwenkung der inneren Endabschnitte 18b der zweiten Lüfterschaufeln 18 der Strömungsquerschnitt zwischen jeweils drei benachbarten Lüfterschaufeln - und damit der gesamte Kühlluftdurchsatz - auf etwa die Hälfte verringert wird.

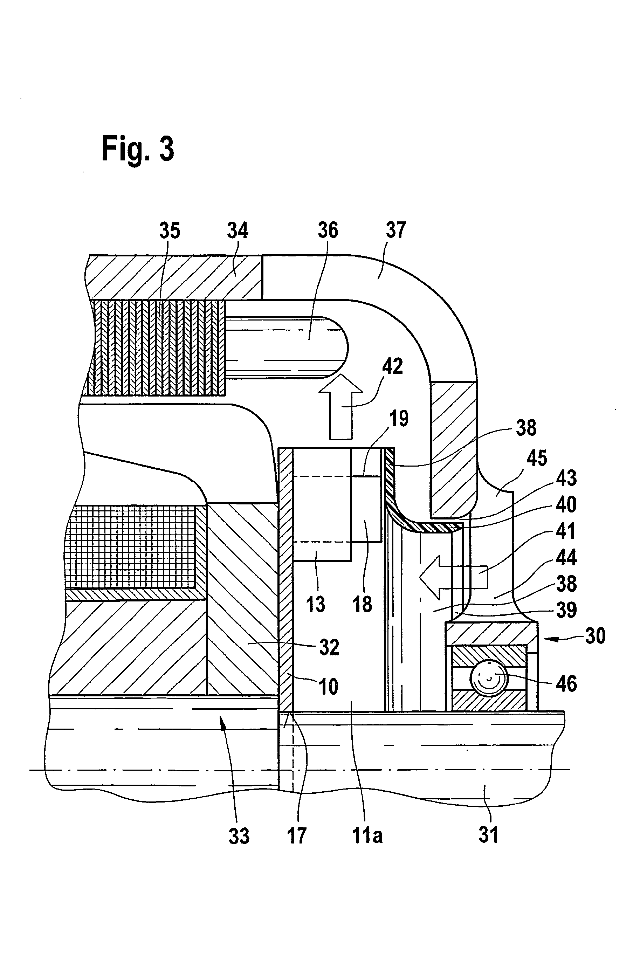

In Fig. 3 ist ein erfindungsgemäßes Lüfterrad 11a in einem Drehstromgenerator 30 für Kraftfahrzeuge im Querschnitt dargestellt, wobei vom Drehstromgenerator 30 lediglich die hintere obere Hälfte im Längsschnitt vergrößert erkennbar ist. Dort ist die Lüfterscheibe 10 mit ihrer zentralen Öffnung 17 auf eine Generatorwelle 31 aufgesetzt und mit ihrer Rückseite mit der Stirnseite einer Polscheibe 32 verschweißt, die Teil eines Klauenpolläufers 33 ist und der von einem im Gehäuse 34 eingesetzten Ständer 35 mit einer Drehstromwicklung 36 umgeben ist. Mit dem Lüfterrad 11a soll dort einerseits die im Klauenpolläufer 33 erzeugte Verlustwärme und die im Ständer 35 erzeugte Verlustwärme des Drehstromgenerators 30 über Lüftungsschlitze 37 des Gehäuses 34 nach außen abgeführt werden. Zur Erzielung einer möglichst effektiven Luftkühlung ist an dem Lüfterrad 11a vorgesehen, dass alle äußeren Endabschnitte 18a der zweiten Lüfterschaufeln 18 über eine Deckscheibe 38 miteinander verbunden sind. Diese Deckscheibe 38 ist an der axial äußeren Stirnseite der zweiten Lüfterschaufeln 18 angeordnet, so dass sie der Lüfterscheibe 11a gegenüberliegt. Die Deckscheibe 38 ist mit einer zentrischen Öffnung 39 versehen, die mit einem axial nach außen gerichteten Einströmtrichter 40 für die Kühlluft ausgebildet ist. Bei diesem Ausführungsbeispiel sind die Deckscheibe 38 und die Lüfterschaufeln 18 mit verschwenkbarem inneren Endabschnitt 18b einteilig aus einem Kunststoff hergestellt. Bei sich drehendem Klauenpolläufer 33 wird mit den Lüfterschaufeln 13 und 18 ein Kühlluftstrom 41 durch den Einströmtrichter 40 axial angesaugt und durch die Kühlkanäle 20 und 21 in einem am Umfang gleichmäßig verteilten radial nach außen gerichteten Kühlluftstrom 42 zum hinteren Wickelkopf der Drehstromwicklung 36 geblasen, um von dort durch die Lüftungsschlitze 37 aus dem Gehäuse 34 der Maschine auszutreten. Dabei wird die Verlustwärme im Klauenpolläufer 33 über Wärmeleitung des Materials zum Lüfterrad geleitet und von dort an die Kühlluft abgegeben. Die Verlustwärme im Ständer 35 der Maschine wird größtenteils durch den radialen Kühlluftstrom 42 vom Wickelkopf der Drehstromwicklung 36 abgeführt, wobei der restliche Teil über Wärmeleitung vom Gehäuse 34 an die Außenluft abgegeben wird. Zur Erzielung eines möglichst großen Kühlluftdurchsatzes im unteren Drehzahlbereich ist bei dem Lüfterrad 11a die axiale Erstreckung der aus Kunststoff gespritzten zweiten Lüfterschaufeln 18 größer als die axiale Erstreckung der auf der ganzen Länge mit der Lüfterscheibe 10 fest verbundenen ersten Lüfterschaufeln 13. Außerdem wird durch die Anordnung der Deckscheibe 38 mit dem Einströmtrichter 40 ein Zurückströmen der erwärmten Kühlluft zur einströmenden Kühlluft dadurch verhindert, dass der Einströmtrichter 40 der Deckscheibe 38 mit engem Luftspalt 43 in eine weitere zentrische Öffnung eines Lagerschildes 45 der elektrischen Maschine eingesetzt ist, in dem das hintere Ende der Generatorwelle in einem Lager 46 aufgenommen ist.

Durch die Kombination von metallischen Lüfterschaufeln 13 und Kunststoff-Lüfterschaufeln 18 läßt sich insbesondere durch den Kunststoff eine strömungsgünstige Formgebung bei gleichzeitig guter thermischer Anbindung des Läufers an die Kühlluft über die metallische Lüfterscheibe 10 herstellen. Außerdem lässt sich das Gelenk 19 an den Kunststoff-Lüfterschaufeln 18 durch eine örtlich reduzierte Materialdicke so gestalten, dass der Lüfter keine komplizierte, verschmutzungsempfindliche Mechanik aufweist. Durch die abwechselnde Anordnung von Lüfterschaufeln mit und ohne verschwenkbarem inneren Endabschnitt 18b wird die Luftförderung selbst beim Anlegen der verschwenkbaren inneren Endabschnitte an ihren Anschlägen 23 nie vollständig unterbrochen und somit immer ein Mindestkühlluftstrom über die Luftkanäle 21 gewährleistet. Dabei sorgen die rückwärtsgekrümmten Lüfterschaufeln 13 und 18 für einen hohen Lüfterwirkungsgrad bei gleichzeitig niedrigem spezifischen Geräuschpegel des Lüfterrades. Zu einer geräuscharmen Luftströmung trägt schließlich auch die Deckscheibe 38 bei, da sie in ihrem glockenförmigen Einströmtrichter 40 Luftwirbel und Druckverluste verhindert und gleichzeitig eine größere Freiheit bei der Gestaltung der Lagerschilde der elektrischen Maschine erlaubt. Dabei sind auch relativ große axiale Toleranzen möglich, ohne dass dadurch die Förderleistung des Lüfterrades beeinflußt wird.

Bei den Ausführungsbeispielen des Lüfterrades nach Fig. 2 und Fig. 3 bildet die Lüfterscheibe 10 ein Einlegeteil für eine Spritzgießform zum Spritzen der Kunststoff-Lüfterschaufeln 18 mitsamt der Deckscheibe 38. Alternativ dazu können aber auch die Lüfterscheibe 10 und das Spritzgußteil aus Deckscheibe 38 mit Kunststoff-Lüfterschaufeln 18 getrennt gefertigt werden und vor oder während der Endmontage am Läufer der elektrischen Maschine durch Nieten, Kleben oder Schweißen miteinander verbunden werden. Die Lüfterscheibe 10 kann dabei zur besseren Wärmeleitung auch aus Aluminiumblech hergestellt sein und über einen Druckring an den Läufer der Maschine axial angepresst werden. In zweckmäßiger Ausgestaltung der Kunststoff-Lüfterschaufeln 18 sind diese nur auf etwa ein Drittel bis ein Viertel ihrer Länge mit der Lüfterscheibe 10 einerseits und mit der Deckscheibe 38 andererseits fest verbunden, so dass der restliche innere Endabschnitt 18b frei in den jeweiligen Luftkanal ragt.

## Patentansprüche

1. Lüfterrad für elektrische Maschinen, insbesondere für Drehstromgeneratoren von Kraftfahrzeugen, mit einer Lüfterscheibe (10), die an ihrer axial nach außen gerichteten Stirnseite kreisringförmig verteilt angeordnete Lüfterschaufeln (18) aufweist, die von der Lüfterscheibe in Achsrichtung vorstehen, so dass Kühlluft unterhalb der Lüfterschaufeln axial angesaugt und durch den zwischen ihnen gebildeten Luftkanälen (20, 21) nach außen geblasen werden kann, wobei die Lüfterschaufeln jeweils nur mit ihrem radial äußeren Endabschnitt (18a) mit der Lüfterscheibe fest verbunden sind, so dass jeweils ihr innerer Endabschnitt (18b) bei steigenden Drehzahlen durch eine dort auftretende Fliehkraft (22) zunehmend radial nach außen verschwenkt wird und **dadurch** den Querschnitt eines mit der benachbarten Lüfterschaufel (13) gebildeten Luftkanals (20) verringert, **wobei** nur ein Teil (18) der Lüfterschaufeln (13, 18) einen durch Fliehkraft (22) nach außen verschwenkbaren inneren Endabschnitt (18b) aufweist, während die übrigen Lüfterschaufeln (13) auf ihrer ganzen Länge starr und mit der Lüfterscheibe (10) fest verbunden sind, **dadurch gekennzeichnet, dass** die Lüfterscheibe (10) aus einer Blechplatine (12) gestanzt und geprägt ist **und** die starren, mit der Lüfterscheibe (10) fest verbundenen Lüfterschaufeln (13) aus der Blechplatine (12) freigestanzt und axial herausgebogen sind, **und** die Lüfterschaufeln (18) mit dem verschwenkbaren inneren Endabschnitt (18b) aus Kunststoff bestehen, wobei der Kunststoff des äußeren Endabschnittes (18a) jeweils um eine aus der Blechplatine (12) der Lüfterscheibe (10) freigestanzte und herausgebogene Haltelasche (16) herumgespritzt ist.

2. Lüfterrad nach Anspruch 1, **dadurch gekennzeichnet, dass** nur jede zweite Lüfterschaufel (18) einen nach aussen verschwenkbaren inneren Endabschnitt (18b) aufweist, während die benachbarten ersten Lüfterschaufeln (13) auf ganzer Länge mit der Lüfterscheibe (10) fest verbunden sind.

3. Lüfterrad nach Anspruch 2, **dadurch gekennzeichnet, dass** der verschwenkbare innere Endabschnitt (18b) der zweiten Lüfterschaufeln (18) über ein Gelenk (19) mit dem äußeren Endabschnitt (18a) verbunden ist.

4. Lüfterrad nach Anspruch 3, **dadurch gekennzeichnet, dass** das Gelenk (19) ein über die ganze axiale Breite der Lüfterschaufel (18) reichendes, insbesondere aus Kunststoff bestehendes Filmscharnier ist.

5. Lüfterrad nach einem der vorherigen Ansprüche, **dadurch gekennzeichnet, dass** die starren, mit der Lüfterscheibe (10) fest verbundenen Lüfterschaufeln (13) jeweils einen Anschlag (23) bilden, gegen den sich jeweils das Ende (18c) des verschwenkbaren inneren Endabschnittes (18b) einer benachbarten Lüfterschaufel (18) bei maximaler Verschwenkung anlegt, so dass der zwischen beiden Lüfterschaufeln (13, 18) gebildete Luftkanal (20) dadurch geschlossen wird.

6. Lüfterrad nach einem der vorherigen Ansprüche, **dadurch gekennzeichnet, dass** alle äußeren Endabschnitte (18a) der Lüfterschaufeln (18) mit verschwenkbarem inneren Endabschnitt (18b) über eine Deckscheibe (38) miteinander verbunden sind, welche der Lüfterscheibe (10) gegenüberliegend an der axial äußeren Stirnseite der Lüfterschaufeln (18) angeordnet ist.

7. Lüfterrad nach Anspruch 6, **dadurch gekennzeichnet, dass** die Deckscheibe (38) eine zentrische Öffnung (39) mit einem axial nach außen gerichteten Einströmtrichter (40) für die Kühlluft versehen ist.

8. Lüfterrad nach Anspruch 7, **dadurch gekennzeichnet, dass** der Einströmtrichter (40) der Deckscheibe (38) mit engem Luftspalt (43) in eine dazu konzentrische Öffnung (44) eines Lagerschildes (45) der elektrischen Maschine (30) einsetzbar ist.

9. Lüfterrad nach Anspruch 6 oder 7, **dadurch gekennzeichnet, dass** die Deckscheibe (38) und die Lüfterschaufeln (18) mit verschwenkbarem inneren Endabschnitt (18b) einteilig aus einem Kunststoff hergestellt sind.

10. Lüfterrad nach einem der vorherigen Ansprüche, **dadurch gekennzeichnet, dass** die Lüfterscheibe (10) auf der Stirnseite einer Polscheibe (32) eines Klauenpolläufers (33) der elektrischen Maschine (30) thermisch leitend befestigt, vorzugsweise angeschweißt ist.

11. Lüfterrad nach einem der vorherigen Ansprüche, **dadurch gekennzeichnet, dass** die Abstände der Lüfterschaufeln (13, 18) voneinander etwa gleich groß sind, so dass bei maximaler Verschwenkung der verschwenkbaren inneren Endabschnitte (18b) der zweiten Lüfterschaufeln (18) der Strömungsquerschnitt zwischen jeweils drei benachbarten Lüfterschaufeln (13, 18) um etwa die Hälfte verringert wird.

12. Lüfterrad nach einem der vorherigen Ansprüche, **dadurch gekennzeichnet, dass** die axiale Erstreckung der Lüfterschaufeln (18) mit verschwenkbarem inneren Endabschnitt (18b) größer ist als die zentrale Erstreckung der auf ganzer Länge mit der Lüfterscheibe (10) fest verbundenen Lüfterschaufeln (13).

13. Lüfterrad nach einem der vorherigen Ansprüche, **dadurch gekennzeichnet, dass** die Lüfterschaufeln (13, 18) entgegen der Drehrichtung (14) geneigt, vorzugsweise rückwärts gekrümmt sind.

14. Drehstromgenerator für Kraftfahrzeuge mit einem mindestens eine Polscheibe (32) aufweisenden Klauenpolläufer (33), **dadurch gekennzeichnet, dass** an der äußeren Stirnseite der mindestens einen Polscheibe (32) ein Lüfterrad mit den Merkmalen des Anspruchs 1 befestigt ist.

## Claims

1. Fan impeller for electrical machines, in particular for three-phase generators in motor vehicles, having a fan disc (10) which has fan blades (18) which are arranged distributed in the form of a circular ring on its end face which points radially outwards, and which fan blades (18) project in the axial direction from the fan disc such that cooling air can be sucked in axially underneath the fan blades and can be blown outwards through the air channels (20, 21) formed between the blades, with the fan blades each being firmly connected to the fan disc only by their radially outer end section (18a), such that, as the rotation speeds rise, their respective inner end section (18b) is increasingly pivoted radially outwards as a result of the centrifugal force (22) that occurs there, thus reducing the cross section of an air channel (20) which is formed with the adjacent fan blade (13) **with** only some (18) of the fan blades (13, 18) having an inner end section (18b) which can be pivoted outwards by centrifugal force (22), while the other fan blades (13) are rigid over their entire length and are firmly connected to the fan disc (10), **characterized in that** the fan disc (10) is stamped from a metal sheet (12) and the rigid fan blades (13) which are firmly connected to the fan disc (10) are stamped free from the metal sheet (12) and are bent axially, **and** the fan blades (18) together with the inner end section (18b) which can pivot are composed of plastic, with the plastic of the outer end section (18a) in each case being extrusion-coated around a holding lug (16) which is stamped free and bent out of the metal sheet (12) of the fan disc (10).

2. Fan impeller according to Claim 1, **characterized in that** only every alternate fan blade (18) has an inner end section (18b) which can be pivoted outwards, while the adjacent first fan blades (13) are firmly connected to the fan disc (10) over their entire length.

3. Fan impeller according to Claim 2, **characterized in that** the inner end section (18b), which can pivot, of the second fan blades (18) is connected to the outer end section (18a) via a joint (19).

4. Fan impeller according to Claim 3, **characterized in that** the joint (19) is a film hinge which extends over the entire axial width of the fan blade (18) and is composed in particular of plastic.

5. Fan impeller according to one of the preceding claims, **characterized in that** the rigid fan blades (13) which are firmly connected to the fan disc (10) each form a stop (23), against which the end (18c) of the inner end section (18b), which can pivot, of an adjacent fan blade (18) in each case rests at the maximum pivot angle, such that the air channel (20) which is formed between the two fan blades (13, 18) is closed in this way.

6. Fan impeller according to one of the preceding claims, **characterized in that** all of the outer end sections (18a) of the fan blades (18) can be connected to one another via a covering disc (38) by means of the inner end section (18b) which can pivot, which covering disc (38) is arranged opposite the fan disc (10) at the axially outer end face of the fan blades (18).

7. Fan impeller according to Claim 6, **characterized in that** the covering disc (38) is provided with a central opening (39) and with an inlet funnel (40), which points axially outwards, for the cooling air.

8. Fan impeller according to Claim 7, **characterized in that** the inlet funnel (40) of the covering disc (38) can be inserted with a narrow air gap (43) into an opening (44), which is concentric with respect to it, in an end bearing (45) of the electrical machine (30).

9. Fan impeller according to Claim 6 or 7, **characterized in that** the covering disc (38) and the fan blades (18) are produced together with the inner end section (18b) which can pivot integrally from a plastic.

10. Fan impeller according to one of the preceding claims, **characterized in that** the fan disc (10) is thermally conductively mounted, preferably welded, on the end face of a pole disc (32) of a claw-pole rotor (33) of the electrical machine (30).

11. Fan impeller according to one of the preceding claims, **characterized in that** the distances between the fan blades (13, 18) are of approximately the same size, such that, when the inner end sections (18b), which can pivot, of the second fan blades (18) are at the maximum pivot angle, the flow cross section between in each case three adjacent fan blades (13, 18) is reduced by about one half.

12. Fan impeller according to one of the preceding claims, **characterized in that** the axial extent of the fan blades (18) with the inner end section (18b) which can pivot is greater than the central extent of the fan blades (13) which are firmly connected to the fan disc (10) over their entire length.

13. Fan impeller according to one of the preceding claims, **characterized in that** the fan blades (13, 18) are inclined in the opposite direction to the rotation direction (14), preferably with backward curvature.

14. Three-phase generator for motor vehicles having a claw-pole rotor (33) which has at least one pole disc (32), **characterized in that** a fan impeller having the features of Claim 1 is attached to the outer end face of the at least one pole disc (32).

## Revendications

1. Roue de ventilateur de machines électriques, notamment pour des alternateurs de véhicules automobiles, comportant un disque de ventilateur (10) dont la face frontale dirigée axialement vers l'extérieur comporte des pales de ventilateur (18) réparties suivant un anneau de cercle, ces pales venant en saillie par rapport au disque dans la direction axiale pour aspirer l'air de refroidissement, axialement sous les pales, et éjecter l'air par les canaux d'air (20, 21) formés entre les pales, les pales étant solidaires chacune du disque de ventilateur seulement par son segment d'extrémité extérieur (18a), radial, de façon que son segment d'extrémité intérieur (18b) soit de plus en plus basculé radialement vers l'extérieur par la force centrifuge (22) produite par l'augmentation de la vitesse de rotation et diminue ainsi la section du canal d'air (20) formé avec les pales voisines (13),
seulement une partie (18) des pales (13, 18) ayant un segment d'extrémité (18b) intérieur qui peut être pivoté vers l'extérieur par la force centrifuge (22) alors que les autres pales (13) sont rigides sur toute leur longueur et sont reliées solidairement au disque de ventilateur (10),
**caractérisée en ce que**
le disque (10) est estampé dans une platine en tôle (12) et est embouti et
les pales (13) rigides, solidaires du disque (10) sont dégagées par estampage de la platine de tôle (18) pour être recourbées axialement et
les pales (18) ayant un segment d'extrémité (18b) intérieur, pivotant, sont en matière plastique,
la matière plastique du segment d'extrémité extérieur (18a) étant surmoulée par injection, chacune autour d'une patte de fixation (16), estampée et recourbée à partir de la platine en tôle (12) du disque de ventilateur (10).

2. Roue de ventilateur selon la revendication 1,
**caractérisée en ce que**
seulement chaque seconde pale de ventilateur (18) comporte un segment d'extrémité (18b) intérieur, qui peut pivoter vers l'extérieur alors que les premières pales de ventilateur (13), voisines, sont reliées solidairement au disque de ventilateur (10) sur toute leur longueur.

3. Roue de ventilateur selon la revendication 2,
**caractérisée en ce que**
le segment d'extrémité intérieur (18b), pivotant des secondes pales de ventilateur (18) est relié par une articulation (19) au segment d'extrémité extérieur (18a).

4. Roue de ventilateur selon la revendication 3,
**caractérisée en ce que**
l'articulation (19) est une charnière s'étendant sur toute la largeur axiale de la pale de ventilateur (18), cette charnière étant notamment un film en matière plastique.

5. Roue de ventilateur selon l'une des revendications précédentes,
**caractérisée en ce que**
les pales de ventilateur (13), rigides, reliées solidairement au disque de ventilateur (10), forment chacune une butée (23) contre laquelle s'appuie l'extrémité respective (18c) du segment d'extrémité intérieur (18b) pivotant d'une pale de ventilateur (18) voisine, pour le pivotement maximum pour fermer ainsi le canal d'air (20) entre les deux pales de ventilateur (13, 18).

6. Roue de ventilateur selon l'une des revendications précédentes,
**caractérisée en ce que**
tous les segments d'extrémité extérieurs (18a) des pales de ventilateur (18) sont reliés au segment d'extrémité (18b), intérieur pivotant par un disque de couverture (38) prévu sur la face frontale axiale extérieure des pales de ventilateur (18), en regard du disque de ventilateur (10).

7. Roue de ventilateur selon la revendication 6,
**caractérisée en ce que**
le disque de couverture (38) a une ouverture centrale (39) avec un cône d'entrée (40) dirigé axialement vers l'extérieur pour l'air frais.

8. Roue de ventilateur selon la revendication 7,
**caractérisée en ce que**
le cône d'entrée (40) du disque de couverture (38) se loge avec un intervalle d'air étroit (43) dans une ouverture concentrique correspondante (44) d'un panneau de palier (45) de la machine électrique (30).

9. Roue de ventilateur selon la revendication 6 ou 7,
**caractérisée en ce que**
le disque de couverture (38) et les pales de ventilateur (18) à segment d'extrémité intérieur (18b), pivotant, sont réalisés en une seule pièce en matière plastique.

10. Roue de ventilateur selon l'une quelconque des revendication précédentes,
**caractérisée en ce que**
le disque de ventilateur (10) est fixé avec conduction thermique sur la face frontale d'un disque polaire (32) d'un rotor à griffe polaire (33) de la machine électrique (30), la fixation est de préférence faite par soudage.

11. Roue de ventilateur selon l'une quelconque des revendication précédentes,
**caractérisée en ce que**
l'intervalle entre les pales de ventilateur (13, 18) est sensiblement identique, de sorte que pour un pivotement maximum, les segments d'extrémité intérieurs (18b) pivotants des secondes pales de ventilateur (18) diminuent sensiblement de moitié la section de passage entre chaque fois trois pales de ventilateur (13, 18) voisines.

12. Roue de ventilateur selon l'une quelconque des revendication précédentes,
**caractérisée en ce que**
l'extension axiale des pales de ventilateur (18) à segments d'extrémité intérieurs (18b) pivotants est plus grande que l'extension centrale des pales de ventilateur (13) reliées solidairement sur toute leur longueur au disque de ventilateur (10).

13. Roue de ventilateur selon l'une des revendications précédentes,
**caractérisée en ce que**
les pales de ventilateur (13, 18) sont inclinées dans la direction opposée à la direction de rotation (14), de préférence en étant courbées vers l'arrière.

14. Alternateur de véhicule automobile comportant au moins un disque polaire (32) muni d'un rotor à griffe polaire (33),
**caractérisé en ce que**
la face frontale extérieure d'au moins un disque polaire (32) porte solidairement une roue de ventilateur ayant les caractéristiques de la revendication 1.
